# EUROPEAN PATENT APPLICATION

(11) **EP 4 614 464 A1**
(43) Date of publication of application: **10.09.2025**
(21) Application number: 25158502.2
(22) Date of filing: 18.02.2025
(51) Int. Cl.: G06V 20/69

(54) **APPARATUS, METHOD, AND PROGRAM**

(30) Priority: 08.03.2024 JP 2024035886
(71) Applicant: Yokogawa Electric Corporation, Tokyo 180-8750 (JP)
(72) Inventor: AKIYOSHI, Ryutaro, Musashino-shi, Tokyo, 180-8750 (JP)
(74) Representative: Hoffmann Eitle

(57) **Abstract**

Provided is an apparatus, including an acquisition unit that acquires an image of a sample containing cells or microorganisms as image-capturing targets; an estimation unit that estimates a proportion of detection targets to image-capturing targets in a sample shown in an image acquired by the acquisition unit, based on a group of an image of a reference sample containing image-capturing targets and a proportion of cells or microorganisms as the detection targets to the image-capturing targets in the reference sample; and an output unit that outputs a proportion estimated by the estimation unit; and a determination unit that determines an extraction condition extracted in an image of the group by image-capturing targets according to the proportion of the group, among extraction conditions of image-capturing targets, which are settable by a parameter indicating a shape or a texture of an image-capturing target in the image, based on the group of an image of the reference sample and the proportion of the detection targets to the image-capturing targets contained in the reference sample, wherein the estimation unit estimates the proportion regarding a sample shown by an input image, by using the extraction condition determined by the determination unit.

## Description

### BACKGROUND

### 1. TECHNICAL FIELD

The present invention relates to an apparatus, a method, and a program.

### 2. RELATED ART

In Patent Document 1 and so on, it is described to "determine whether a cell is a stem cell based on a comparison result of an optical path length inside a cell nucleus region and an optical path length outside the cell nucleus region" (claim 1 of Patent Document 1).

### Prior Art Document

### Patent Document

Patent Document 1: Japanese Patent Application Publication No. 2015-097498.
Patent Document 2: Japanese Patent Application Publication No. 2012-231709.

### SUMMARY

A first aspect of the present invention provides an apparatus including: an acquisition unit that acquires an image of a sample containing cells or microorganisms as image-capturing targets; an estimation unit that estimates a proportion of detection targets to image-capturing targets in a sample shown in an image acquired by the acquisition unit, based on a group of an image of a reference sample containing image-capturing targets and a proportion of cells or microorganisms as the detection targets to the image-capturing targets in the reference sample; and an output unit that outputs a proportion estimated by the estimation unit. the estimation unit may estimate a proportion of the detection targets to the image-capturing targets in the sample that is different from the reference sample.

The apparatus may further includes a determination unit that determines an extraction condition for extracting image-capturing targets in an image of the group according to the proportion of the group, among extraction conditions of image-capturing targets, which are settable by a parameter indicating a shape or a texture of an image-capturing target in the image, based on the group of an image of the reference sample and the proportion regarding the reference sample, wherein the estimation unit may estimate the proportion regarding a sample shown by an input image, by using the extraction condition determined by the determination unit.

In the apparatus described above, the determination unit may determine an extraction condition for extracting image-capturing targets in the image according to a proportion of the detection targets to image-capturing targets in each of a plurality of groups, including the group, based on the plurality of groups with proportions, including the proportion, different from each other.

In any apparatus as described above including the determination unit, the parameter indicating a shape of an image-capturing target in an image may include at least one of an area, diameter, perimeter, circularity, compactness, ratio of major axis and minor axis, skeletal length, number of branches or number of limbs of the image-capturing target.

In the apparatus of the first aspect as described above, the estimation unit may perform estimation by using a learning model that outputs the proportion regarding a sample shown by an input image, which is a learning model produced by learning processing using learning data including the group of an image of the reference sample and the proportion regarding the reference sample.

The apparatus of the first aspect as described above further includes a learning processing unit that produces a learning model that outputs the proportion regarding a sample shown by an input image, by using learning data including the group of an image of the reference sample and the proportion regarding the reference sample, wherein the estimation unit may perform estimation by using the learning model.

In any apparatus as described above, the acquisition unit may acquire the image captured in a nondestructive and non-staining state of the detection targets.

Any apparatus as described above may further include a specification unit that specifies the proportion regarding the reference sample by performing at least one of destruction or staining on cells or microorganisms contained in the reference sample.

Any apparatus as described above may further include a preprocessing unit that produces the reference sample by performing preprocessing on a sample with a cell sorter.

Any apparatus as described above may further include an image capturing unit that captures a sample.

In any apparatus as described above, the detection targets may be cells or microorganisms of a predetermined type. The detection targets may be hematopoietic stem cells (HPCs) differentiated from iPS cells.

In any apparatus as described above, the detection targets may be cells or microorganisms in a predetermined state. The detection targets may be cells in a normal or abnormal state, cells in a specific cell cycle, cells in a specific gene expressed or not expressed state, or iPS cells in a differentiated or undifferentiated state into specific cells.

A second aspect of the present invention provides a method including: acquiring an image of a sample containing cells or microorganisms as image-capturing targets; estimating a proportion of detection targets to image-capturing targets in a sample shown in an acquired image , based on a group of an image of a reference sample containing image-capturing targets and a proportion of cells or microorganisms as the detection targets to the image-capturing targets in the reference sample; and outputting an estimated proportion.

A third aspect of the present invention provides a non-transitory computer-readable medium having recorded thereon a program which, when executed by a computer, causes the computer to function as: an acquisition unit that acquires an image of a sample containing cells or microorganisms as image-capturing targets; an estimation unit that estimates a proportion of detection targets to image-capturing targets in a sample shown in an image acquired by the acquisition unit, based on a group of an image of a reference sample containing image-capturing targets and a proportion of cells or microorganisms as the detection targets to the image-capturing targets in the reference sample; and an output unit that outputs a proportion estimated by the estimation unit.

Note that the summary clause does not necessarily describe all necessary features of the embodiments of the present invention. The present invention may also be a sub-combination of the features described above.

### BRIEF DESCRIPTION OF THE DRAWINGS

Fig. 1 illustrates an apparatus 1 according to a first embodiment.
Fig. 2 illustrates operations of the apparatus 1.
Fig. 3 illustrates a tip shape of an image-capturing target.
Fig. 4 illustrates a hole shape of the image-capturing target.
Fig. 5 illustrates a ridge shape of the image-capturing target.
Fig. 6 illustrates a valley shape of the image-capturing target.
Fig. 7 illustrates an edge shape of the image-capturing target.
Fig. 8 illustrates a saddle shape of the image-capturing target.
Fig. 9 illustrates an apparatus 1A according to a second embodiment.
Fig. 10 illustrates operations of the apparatus 1A.
Fig. 11 illustrates an example of a computer 1200 in which a plurality of aspects of the present invention may be wholly or partially embodied.

### DESCRIPTION OF EXEMPLARY EMBODIMENTS

Hereinafter, embodiments of the present invention will be described. However, the following embodiments are not for limiting the invention according to the claims. In addition, not all of the combinations of features described in the embodiments are essential to the solving means of the invention.

### (First Embodiment)

### (Apparatus 1)

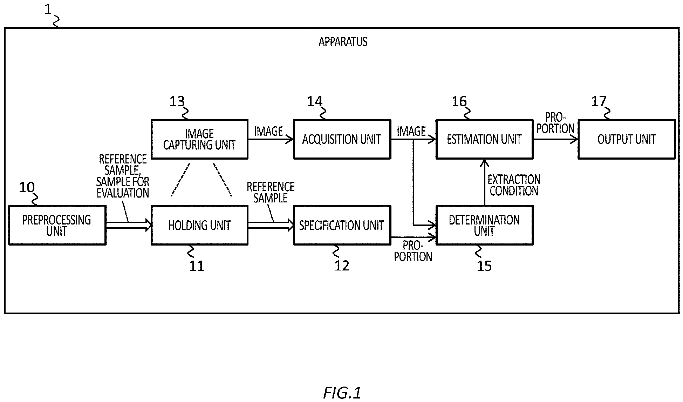

Fig. 1 illustrates an apparatus 1 according to the present embodiment. As described in detail below, the apparatus 1 according to the present embodiment estimates a proportion of detection targets contained in a sample for evaluation, based on an image of a reference sample containing cells as image-capturing targets, and a proportion of the detection targets contained in the reference sample. The apparatus 1 may include a preprocessing unit 10, a holding unit 11, a specification unit 12, an image capturing unit 13, an acquisition unit 14, a determination unit 15, an estimation unit 16, and an output unit 17.

Herein, the sample may be in a liquid form, and cells as image-capturing targets may be dispersed inside. As one example, the sample may be a cell culture medium. The cells as image-capturing targets may be cells that can be captured by an image capturing unit 13. The cells as image-capturing targets may be cells of human origin or cells of other organisms. As one example, the cells as image-capturing targets may be iPS cells that have undergone differentiation processing, and may include at least one of undifferentiated cells or differentiated cells.

The reference sample may be a sample for determining a condition used to estimate the proportion of the detection targets contained in the sample for evaluation (also referred to as an extraction condition). The detection targets may be cells of which content proportion is to be detected among the cells as image-capturing targets. The detection targets may be a predetermined type of cells (hematopoietic stem cells (HPCs) differentiated from iPS cells as one example) or cells in a predetermined state (cells in a normal or abnormal state, cells in a specific cell cycle, cells in a specific gene expressed or not expressed state, or iPS cells in a differentiated or undifferentiated state into specific cells as one example). A proportion of detection targets contained in the sample may be a proportion of the detection targets to the image-capturing targets in the sample.

The sample for evaluation may be a sample of which proportion of the detection targets is estimated. The sample for evaluation may be another sample different from the reference sample. The cells to be detected contained in the sample for evaluation may be the same or different in source of acquisition, culture condition and cell state, as long as they are cells of the same type as the cells to be detected contained in the reference sample. Additionally or alternatively, the cells to be detected contained in the sample for evaluation may be the same or different in source of acquisition, culture technique and cell type, as long as they are cells in the same state as the cells to be detected contained in the reference sample.

### ((Preprocessing Unit 10))

The preprocessing unit 10 performs preprocessing on the sample. The preprocessing unit 10 may acquire the sample from an external source.

The preprocessing unit 10 may perform preprocessing on the acquired sample before determining the extraction condition to produce the reference sample. The preprocessing unit 10 may perform processing as the preprocessing with a cell sorter. The cell sorter may use differences in morphology, surface antigens, fluorescent protein mass or the like of the cells to fractionate cells to be detected from the sample.

After determining the extraction condition, the preprocessing unit 10 may supply the acquired sample as it is to the holding unit 11 as a sample for evaluation without any preprocessing. The preprocessing unit 10 may supply the sample to the holding unit 11 while maintaining the sample in a closed system environment, for example, the sample may be supplied to the holding unit 11 while being contained in a container such as a culture bag. The sample maintained in the closed system environment may be a sample in the process of culture. However, the preprocessing unit 10 may produce the sample for evaluation by the preprocessing and supply it to the holding unit 11.

### ((Holding Unit 11))

The holding unit 11 holds the sample (that is, the reference sample or the sample for evaluation) supplied from the preprocessing unit 10 within an image-capturing region of the image capturing unit 13. The holding unit 11 may be formed in a shape of a container to contain the sample inside, or may be formed in a shape of a cylinder to cause the sample to flow inside. In these cases, the holding unit 11 may have a translucent window member at a position opposite the image capturing unit 13 so that the sample inside can be captured by the image capturing unit 13. When the sample contained inside the container to be maintained in the closed system environment is supplied, the holding unit 11 may be formed in a shape of a pedestal to support the sample from below with the container.

Before determining the extraction condition, the holding unit 11 may supply the sample captured by the image capturing unit 13 (that is, the reference sample) to the specification unit 12. After determining the extraction condition, the holding unit 11 may discharge the sample after image-capturing (that is, the sample for evaluation) to the outside. When the sample contained in the container to be maintained in the closed system environment is supplied, the holding unit 11 may discharge the sample as being maintained in the closed system environment (that is, as being contained inside the container) outside the apparatus 1.

### (((Specification Unit 12)))

The specification unit 12 specifies the proportion of the detection targets contained in the reference sample (also referred to as a "measured proportion" to be distinguished from an estimated proportion). The specification unit 12 may perform at least one of destruction or staining on the cells contained in the reference sample to specify the proportion of the detection targets. As one example, the specification unit 12 may specify the proportion of the detection targets by using at least one methodology of flow cytometry (FCM), quantitative PCR (qPCR), RNA sequencing or immunostaining. The specification unit 12 may specify the proportion of the detection targets contained in the reference sample of a portion captured by the image capturing unit 13, or may specify the proportion of the detection targets contained in the reference sample of a portion that is not captured. The specification unit 12 may supply the specified proportion of the detection targets (that is, the measured proportion) to the determination unit 15.

### (((Image Capturing Unit 13)))

The image capturing unit 13 captures the sample. The image capturing unit 13 may capture each of the reference sample and the sample for evaluation. The image capturing unit 13 may capture the sample held by the holding unit 11. The image capturing unit 13 may at least capture the sample for evaluation when the detection targets are in a nondestructive and non-staining state. In the present embodiment, as one example, the image capturing unit 13 may capture each of the reference sample and the sample for evaluation when the detection targets are in a nondestructive and non-staining state. The detection targets being nondestructive may mean that destruction processing is not performed on each portion of the detection targets. The detection targets being non-staining may mean that staining processing is not performed on each portion of the detection targets.

The image capturing unit 13 may have a microscope for enlarging and capturing the image-capturing target. The microscope may be a microscope of any type, for example, a bright-field microscope or the like. The image capturing unit 13 may supply a captured image of the sample to the acquisition unit 14.

### (((Acquisition Unit 14)))

The acquisition unit 14 acquires an image of the sample containing cells or microorganisms as the image-capturing targets. The acquisition unit 14 may acquire an image of a reference sample before determining the extraction condition. The acquisition unit 14 may acquire an image captured when the detection targets are in a nondestructive and non-staining state, as an image of the reference sample. The acquisition unit 14 may acquire the image of the reference sample from the image capturing unit 13 and supply it to the determination unit 15.

The acquisition unit 14 may acquire the image of the sample for evaluation after determining the extraction condition. The acquisition unit 14 may acquire an image captured when the detection targets are in a nondestructive and non-staining state, as the image of the sample for evaluation. The acquisition unit 14 may acquire the image of the sample for evaluation from the image capturing unit 13 and supply it to the estimation unit 16.

### (((Determination Unit 15)))

The determination unit 15 determines the extraction condition used to estimate a proportion of the detection targets. The determination unit 15 may determine the extraction condition based on a group (also referred to as a corresponding set) of the image of the reference sample and a proportion of the cells as the detection targets to the image-capturing targets in the reference sample (also referred to as a proportion of the detection targets contained in the reference sample). The determination unit 15 may associate the image of the reference sample supplied from the acquisition unit 14 to the measured proportion supplied from the specification unit 12 to make a corresponding set.

The extraction condition may be a condition for extracting at least a part of the image-capturing targets from the image, that is, an extraction condition of the cells to be captured, and may not necessarily be an extraction condition of the cells to be detected. The extraction condition may be a condition settable by a parameter (also referred to as a parameter-for-condition) indicating a shape or texture of image-capturing targets in the image, and may be a condition, among such conditions, for extracting the image-capturing targets according to a measured proportion of a corresponding set in the image of the corresponding set. In this manner, when image-capturing targets inside the image that match the extraction condition are detected, the proportion of the detected image-capturing targets and the measured proportion of the corresponding set may be approximated.

Herein, image-capturing targets according to a measured proportion of a corresponding set may refer to image-capturing targets in the proportion within an error range centered on the measured proportion. As one example, when the measured proportion of the corresponding set is 50% and the width of the error range is 2Δ% (Δ is any natural number), the image-capturing targets according to the measured proportion may be the image-capturing targets in a proportion of (50-Δ)% to (50+Δ)%. However, the image-capturing targets according to the measured proportion of the corresponding set may be the image-capturing targets in the measured proportion as it is.

A parameter-for-condition indicating the shape of the image-capturing target in the image may include at least one of an area of the image-capturing targets (µm²), diameter (µm), perimeter (µm), circularity, compactness, ratio of major axis and minor axis, skeletal length, number of branches, or number of limbs. The compactness may be a measure of how packed cell's internal structures (cytoplasm, nucleus, etc.) are, and is also referred to as Compactness. The ratio of major axis and minor axis may be the ratio of the length of the cell in the major axis direction to the length in the minor axis direction, and is also referred to as Anisometry. The number of branches may be the number of branching points, and the number of limbs may be the number of limbs at the end of a branch. The determination unit 15 may detect cells in the image by image recognition and calculate a parameter-for-condition from the detected cells.

The texture of the image-capturing target in the image may be an appearance or pattern of the image-capturing targets, and may be caused by the shape of the image-capturing target in the image-capturing direction. The parameter-for-condition indicating the texture of the image-capturing target in the image may include a number of at least one preset texture. The number of textures may be the number of regions showing the texture. The preset textures include, for example, a texture indicating a tip shape (Peak), a texture indicating a hole shape (Hole), a texture indicating a ridge shape (Ridge), a texture indicating a valley shape (Valley), a texture indicating an edge shape (Edge), a texture indicating a saddle shape (Saddle) and so on. Details about each texture are described below.

The condition settable by a parameter-for-condition may be a numerical range of a parameter for at least one and preferably more than one type of conditions. For example, the condition settable by the parameter-for-condition may be that the circularity is greater than 0.4 and the area is greater than 100 µm². The determination unit 15 may supply the determined extraction condition to the estimation unit 16.

### (((Estimation Unit 16)))

The estimation unit 16 estimates the proportion of detection targets to the image-capturing targets contained in the sample (also referred to as the proportion of detection targets contained in the sample) as shown by the image acquired by the acquisition unit 14. The estimation unit 16 may estimate the proportion of detection targets contained in the sample for evaluation according to the input of the image of the sample for evaluation that is different from the reference sample. The estimation unit 16 may perform estimation based on the corresponding set of the image of the reference sample and the proportion of the detection targets contained in the reference sample. As one example in the present embodiment, the estimation unit 16 may estimate the proportion of the detection targets for the sample shown in the input image by using the extraction condition determined by the determination unit 15 based on the corresponding set.

The estimation unit 16 may estimate the proportion of the image-capturing targets that match the extraction condition among the image-capturing targets in the input image as the proportion of the detection targets. In the same manner as the determination unit 15, the estimation unit 16 may calculate the parameter-for-condition from the image-recognized cells in the image of the sample for evaluation, and calculate the proportion of cells that match the extraction condition. However, the estimation unit 16 may not necessarily calculate the parameter for a condition that is not included in the extraction condition. The estimation unit 16 may supply the estimated proportion to the output unit 17.

### (((Output Unit 17)))

The output unit 17 outputs the proportion estimated by the estimation unit 16. The output unit 17 may output the proportion estimated by the estimation unit 16 according to the supply of the image of the sample for evaluation to the estimation unit 16.

According to the above apparatus 1, based on the corresponding set of the image of the reference sample and the proportion of detection targets contained in the reference sample, the proportion of detection targets contained in the sample for evaluation indicated by the acquired image is estimated and output. Therefore, because the proportion of the detection targets in the sample can be acquired by capturing the sample for evaluation, the proportion of the cells to be detected can be acquired while maintaining cells in the sample.

The extraction condition, among the extraction conditions of the image-capturing targets, for extracting the image-capturing targets in the image of the corresponding set according to the proportion of the corresponding set is determined, which is settable by the parameter-for-condition of image-capturing targets in the image based on the corresponding set of the image of the reference sample and the proportion of the detection targets contained in the reference sample, and the proportion of the detection targets about the sample shown by the input image is estimated by using the determined extraction condition. Therefore, by capturing the sample, the proportion of the detection targets in the sample can be estimated with a high accuracy.

Because the parameter-for-condition indicating the shape of the image-capturing target in the image includes at least one of an area, diameter, perimeter, circularity, compactness, ratio of major axis and minor axis, skeletal length, number of branches or number of limbs of the image-capturing target, and the parameter-for-condition indicating the texture of the image-capturing target in the image includes the number of at least one preset texture, the image-capturing targets that match the extraction condition can be surely specified in the input image. Therefore, the proportion of the detection targets can be surely estimated.

Because the image captured when the detection targets are in a nondestructive and non-staining state is acquired as the image of the sample for evaluation, the proportion of cells to be detected can be acquired without damaging the state of the detection targets by destruction or staining.

At least one of destruction or staining is performed on cells contained in the reference sample, and the proportion of the detection targets contained in the reference sample is specified. Therefore, the proportion of the detection targets contained in the reference sample can be accurately specified.

Because the reference sample is produced by performing preprocessing on the sample by the cell sorter, the proportion of the detection targets can be specified when there are few image-capturing targets other than the detection targets in the reference sample. Therefore, it is possible to prevent image-capturing targets other than the detection targets from being incorrectly specified as detection targets, and to accurately specify the proportion of the detection targets contained in the reference sample.

Because the sample is captured inside the apparatus 1, the entire process from image-capturing of the sample for evaluation to estimating the proportion of the detection targets can be performed inline.

Because the detection targets are cells of a predetermined type, the proportion of cells of the type can be estimated. Because the detection targets are cells in a predetermined state, the proportion of the cells in the state can be estimated.

### ((Operations))

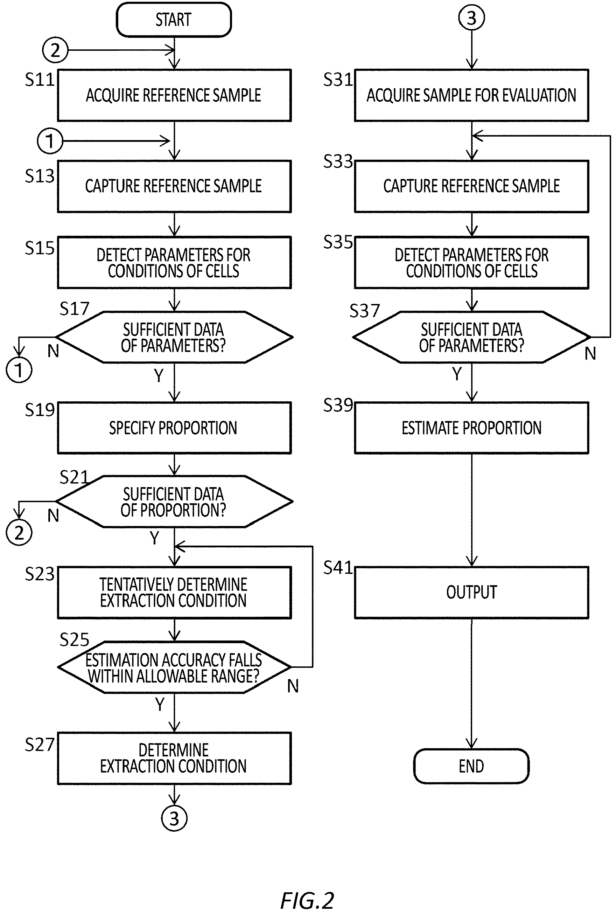

Fig. 2 illustrates operations of the apparatus 1. By performing process of steps S11 to S41, the apparatus 1 estimates the proportion of the detection targets contained in the sample for evaluation.

In step S11, the preprocessing unit 10 acquires the reference sample. The preprocessing unit 10 may perform preprocessing on the sample acquired from an external source to produce the reference sample. As one example, the preprocessing unit 10 may fractionate the cells to be detected with the cell sorter to produce the reference sample.

The image capturing unit 13 in step S13 captures the reference sample. The image capturing unit 13 may capture the reference sample that has been pre-processed and held in the holding unit 11. The captured image may be supplied to the determination unit 15 via the acquisition unit 14.

In step S15, the determination unit 15 detects the parameter-for-condition of the cells as image-capturing targets from the image. The parameter-for-condition may be an average value of a plurality of cells as the image-capturing targets. The determination unit 15 may detect parameters-for-condition of a plurality of types (as one example, an area, diameter, perimeter, circularity, compactness, ratio of major axis and minor axis, skeletal length, number of branches and number of limbs).

In step S17, the determination unit 15 determines whether a number of pieces of data of the parameters-for-condition has reached a required number of pieces of data. The number of pieces of data of parameters-for-condition may be the number of parameters-for-condition detected in step S15 regarding the same reference sample. For example, in step S15, when two parameters-for-condition (an area and diameter, as one example) are detected, the number of pieces of data of the parameters-for-condition may be 2. The required number of pieces of data may be a number of types of parameters-for-condition (as one example, an area, diameter, perimeter, circularity, compactness, ratio of major axis and minor axis, skeletal length, number of branches and number of limbs).

When the number of pieces of data of parameters-for-condition is determined not to reach the required number of pieces of data (step S17; No), the process may move to step S13. In this manner, the image of the reference sample may be re-captured to detect the parameters-for-condition. When the number of pieces of data of parameters-for-condition has been determined to reach the required number of pieces of data (step S17; Yes), the process may move to step S19.

In step S19, the specification unit 12 specifies the proportion of the detection targets contained in the reference sample acquired in step S11 (that is, the measured proportion). The specification unit 12 may perform at least one of destruction or staining on cells contained in the reference sample to specify the proportion of the detection targets. The specified proportion may be supplied to the determination unit 15. As one example in the present embodiment, identification information of each reference sample may be attached to the image supplied to the determination unit 15 in step S13 and the proportion supplied to the determination unit 15 in step S19, and the determination unit 15 may associate the image and the measured proportion regarding the same reference sample based on this identification information to make a corresponding set.

The determination unit 15 in step S21 determines whether the number of pieces of data of the specified measured proportion in step S19 has reached the required number of pieces of data. The number of pieces of data of the proportion may be a number of specified measured proportions in step S19 regarding each reference sample acquired in step S11. The required number of pieces of data may be any number that has been preset. The determination unit 15 may determine whether the number of pieces of data of the proportions falling within each predetermined numerical range (as one example, 80 to 90%, 90 to 100% or the like) has reached the required number of pieces of data.

When the number of pieces of data of the proportions has been determined to reach the required number of pieces of data (step S21; Yes), the process may move to step S23. When the number of pieces of data of the proportions has been determined not to reach the required number of pieces of data (step S21; No), the process may move to step S11. In this manner, another reference sample is re-acquired to perform the process of steps S13 to S19. As long as the cells to be detected contained in the reference sample in step S11 in each round are the same type of cells as each other, the source of acquisition, culture conditions, cell state, and liquid components of the cells as image-capturing targets may be the same or may be different. Additionally or alternatively, as long as the cells to be detected contained in the reference sample are cells in the same state as each other, the source of acquisition, culture conditions, cell type, and liquid components of the cells as image-capturing targets may be the same or may be different.

In step S23, the determination unit 15 tentatively determines the extraction condition. The determination unit 15 may tentatively determine the condition settable by the parameter-for-condition of the image-capturing target in the image as the extraction condition.

In step S25, the determination unit 15 determines whether the estimation accuracy regarding the tentatively determined extraction conditions falls within the allowable range. The determination unit 15 may calculate the proportion of the image-capturing targets extracted with the tentatively determined extraction condition from the image of the corresponding set, that is, the estimated proportion of the detection targets, regarding at least one corresponding set, and calculate the estimation accuracy for the measured proportion of the corresponding set (that is, the proportion of actual detection targets).

The estimation accuracy may be a match percentage between the estimated proportion and the measured proportion of the detection targets. In the present embodiment, as one example, the estimation accuracy is a value calculated by (measured proportion/estimated proportion) × 100, where the smaller the error, the closer to 100%. The allowable range is a range set according to the error range of the estimated proportion, and may be {measured proportion/(estimated proportion - Δ)} × 100 to {measured proportion/(estimated proportion + Δ)} × 100 when the error range width is 2Δ%.

The determination unit 15 may calculate the estimation accuracy for each of a plurality of corresponding sets of which measured proportions differ from each other, and determine whether all calculated estimation accuracies fall within the allowable range. As one example, the determination unit 15 may determine whether the estimation accuracy calculated for the first corresponding set including the image of the reference sample of which measured proportion is 50% falls within {50/(estimated proportion - Δ)} ×100 to {50/(estimated proportion + Δ)} ×100, and whether the estimation accuracy calculated for the second corresponding set including the image of the reference sample of which measured proportion is 60% falls within {60/(estimated proportion - Δ)} ×100 to {60/(estimated proportion + Δ)} ×100.

When the estimation accuracy is determined not to fall within the allowable range (step S25; No), the process may move to step S23. In this way, another extraction condition is tentatively determined. When the estimation accuracy is determined to fall within the allowable range (step S25; Yes), the process may move to step S27.

In step S27, the determination unit 15 determines the extraction condition tentatively determined in the most recent step S25 as the extraction condition to be used. In this manner, the condition for extracting the image-capturing targets in the image of the corresponding set according to the measured proportion of the corresponding set among the conditions settable by the parameter-for-condition of the image-capturing targets in the image is determined to be the extraction condition. The extraction condition is determined for extracting the image-capturing targets in the image of the corresponding set according to the measured proportion in each of a plurality of corresponding sets (that is, the proportion of actual detection targets), based on the plurality of corresponding sets where the measured proportions of the detection targets are different from each other, by determining the extraction condition, regarding which the estimation accuracies for the plurality of corresponding sets fall within the allowable range.

The determined extraction condition may be supplied to the estimation unit 16. With the above process of steps S11 to S27, it is possible for the estimation unit 16 to estimate the proportion of the detection targets contained in the sample according to the input of the image of the sample for evaluation.

In step S31, the preprocessing unit 10 acquires the sample for evaluation. The preprocessing unit 10 may acquire the sample for evaluation as it is from an external source.

In step S33, the image capturing unit 13 captures the sample for evaluation. The image capturing unit 13 may capture the sample for evaluation held by the holding unit 11. The captured image may be supplied to the acquisition unit 14. In this manner, the image of the sample for evaluation is acquired by the acquisition unit 14, and is supplied from the acquisition unit 14 to the estimation unit 16.

In step S35, the estimation unit 16 detects, from the image, the parameters-for-condition contained in the extraction condition among the parameters-for-condition of the cells as image-capturing targets.

In step S37, the estimation unit 16 determines whether the number of pieces of data of the parameters-for-condition has reached the required number of pieces of data. The number of pieces of data of the parameters-for-condition may be a number of the parameters-for-condition detected in step S35 for the same sample for evaluation. The required number of pieces of data may be a number of the parameters-for-condition contained in the extraction condition.

When the number of pieces of data of a parameters-for-condition is determined not to reach the required number of pieces of data (step S37; No), the process may move to step S33. In this manner, the image of the sample for evaluation may be re-captured to detect the parameters-for-condition. When the number of pieces of data of a parameters-for-condition has been determined to reach the required number of pieces of data (step S37; Yes), the process may move to step S39.

In step S39, the estimation unit 16 estimates the proportion of the detection targets contained in the sample for evaluation. In this manner, the proportion of the detection targets contained in the sample for evaluation shown in the acquired image is estimated by the estimation unit 16. The estimation unit 16 may estimate the proportion of the image-capturing targets that match the extraction condition among the image-capturing targets in the image of the sample for evaluation, as the proportion of the detection targets.

Then, in step S41, the output unit 17 outputs the estimated proportion of the detection targets. The output unit 17 may display the estimated proportion, and may transmit it to external equipment.

According to the above operations, the extraction conditions for extracting the image-capturing targets in the image according to the measured proportion in each of a plurality of corresponding sets is determined, based on the plurality of corresponding sets where the measured proportions (that is, the proportions of the actual detection targets) are different from each other. Therefore, regardless of the proportion of the detection targets contained in the image of the sample which is input, the proportion of the detection targets in the sample can be estimated with a high accuracy.

### ((Example))

### (((Preparation of Reference Sample)))

Adhesion culture of iPS cells (201B7 strain) was conducted for 7 days using culture microplates for adherent cells (Iwaki Co., Ltd.). The cultured iPS cells were detached from the microplates by the enzyme "TryPLE" (registered trademark) (Thermo Fisher Scientific Co., Ltd.) and suspended in StemFit medium (Ajinomoto Co., Ltd.) for passage culture to prepare single cells of iPS cells. Y-27632 (FUJIFILM Wako Pure Chemicals Co., Ltd.) was added to the medium to a final concentration of 10 µM.

The prepared single cells were seeded into culture bags with wells (Toyo Seikan Group Holdings Co., Ltd.) that have been treated with cell low-adhesion treatment, and cultured for 1 day to aggregate the cells and create spheres. The iPS cell spheres were differentiated into hematopoietic stem cells (HPCs) by the embryoid body (EB) method, and the resulting cells were collected. The collected cells were seeded into 24-well plates (Iwaki Co., Ltd.) to make 4000 cells per well and used as the reference sample.

### (((Detection of A parameter-for-condition)))

Cell images of each well were captured using the "Image Cytometer CQ-1" (Yokogawa Electric Corp.). Image analysis software "CellPathfinder" (Yokogawa Electric Corp.) was used for the obtained images to eliminate foreign substances other than cells and to recognize cells in the images. Shape analysis was performed on the recognized cells to detect area (µm²), diameter (µm), perimeter (µm), circularity, compactness, ratio of major axis and minor axis, skeletal length, number of branches and number of limbs as a parameter-for-condition.

### (((Specification of Proportion)))

Flow cytometry (FCM) analysis was performed on a part of cells in the reference sample to specify the proportion of hematopoietic stem cells (HPCs) marked by the CD34 marker (that is, the measured proportion of the detection targets), which was 66.3% of all cells.

### (((Determination of Extraction Conditions)))

Among the conditions settable by the parameter-for-condition, the conditions using circularity and area (µm²) were determined as circularity > 0.465 and area (µm²) > 100 as the conditions under which the image-capturing targets in a proportion matching the measured proportion are extracted in the image.

### (((Proportion Estimation of Sample for Evaluation)))

The iPS cells were differentiated into hematopoietic stem cells (HPCs) in the same manner as the reference sample, and single cells were collected. Cell images of each well were captured for the collected cells using the "Image Cytometer CQ-1" (Yokogawa Electric Corp.), and the image analysis software "CellPathfinder" (Yokogawa Electric Corp.) was used to eliminate foreign substances other than cells and to recognize the cell images. Shape analysis was performed on the recognized cells to detect the circularity and area of each cell. Among the cells in the image, the proportion of cells that met the extraction conditions of circularity > 0.465 and area (µm²) > 100, i.e., the estimated proportion of hematopoietic stem cells, was 73.66%.

### (((Verification of Estimation Accuracy)))

Flow cytometry (FCM) analysis was performed on a part of the sample for evaluation to specify the proportion of hematopoietic stem cells (HPCs) marked by the CD34 marker, which was 65.1% of all cells. This resulted in a match percentage of 88.4% between the estimated proportion and the actual measured proportion (= 65.1/73.66 × 100).

In the same manner as in the above example, when the extraction conditions were set to compactness > 1.08 and area (um²) > 100, the match percentage between the estimated proportion of the sample for evaluation and the measured proportion was 94.8%. When the extraction conditions were set as major axis/ minor axis ratio > 1.05 and area (µm²) > 100, the match percentage between the estimated proportion of the sample for evaluation and the measured proportion was 92.8%.

### ((Texture of Image-capturing Target))

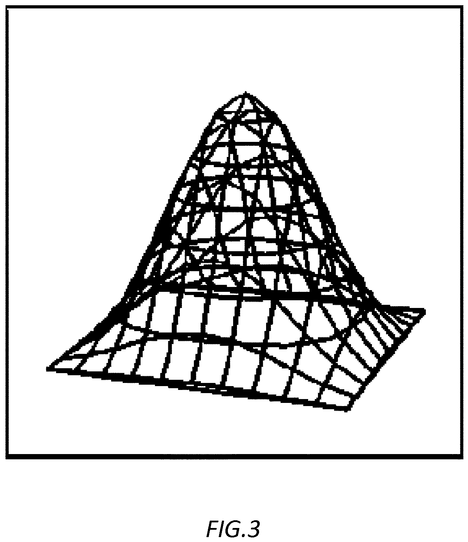

Fig. 3 illustrates a tip shape of the image-capturing target. In Fig. 3 to Fig. 8, the outline of the image-capturing target is illustrated as a mesh-shaped pattern, the image-capturing direction is regarded to be an up and down direction, and the plane perpendicular to the image-capturing direction is illustrated as a white rectangle.

The tip shape may be a cone-shaped protrusion in the image-capturing direction. The texture of the tip shape may be caused by the tip shape and may vary in brightness as moving away from the center point.

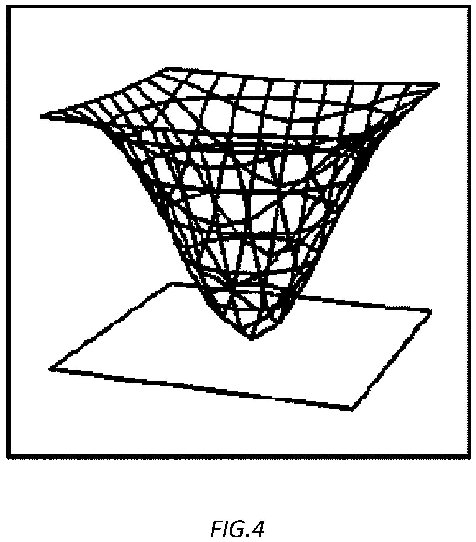

Fig. 4 illustrates a hole shape of the image-capturing target. The hole shape may be cone-shaped and concave in the image-capturing direction. The texture of the hole shape may be caused by the hole shape and may vary in brightness as moving away from the center point.

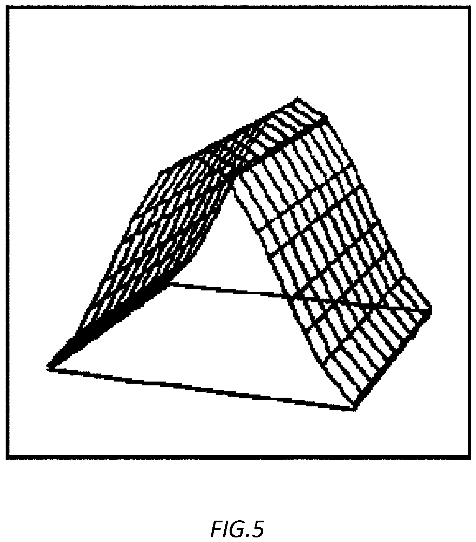

Fig. 5 illustrates a ridge shape of the image-capturing target. The ridge shape may be a ridge- shaped protrusion in the image-capturing direction. The texture of the ridge shape may be caused by the ridge shape and may vary in brightness as moving away from the center line (i.e., the ridge line or ridgeline).

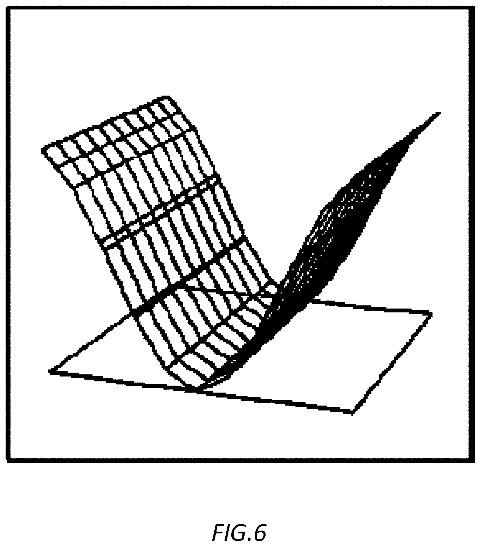

Fig. 6 illustrates a valley shape of the image-capturing target. The valley shape may be a valley-shaped and concave in the image-capturing direction. The texture of the valley shape may be caused by the valley shape and may vary in brightness as moving away from the center line (i.e., the valley line).

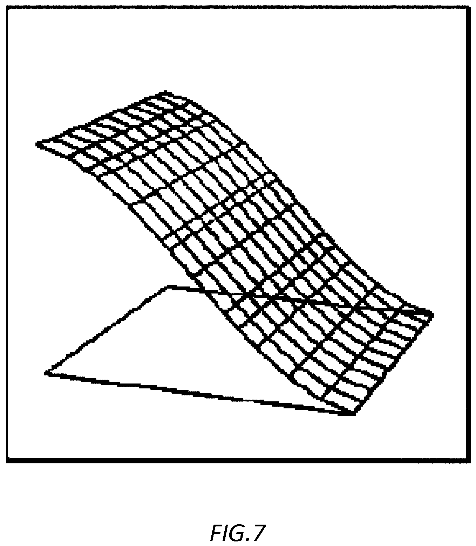

Fig. 7 illustrates an edge shape of the image-capturing target. The edge shape may be a shape of an end portion of the image-capturing target. The texture of the edge shape may be caused by the edge shape, and may be a texture of which brightness changes toward the end portion of the image-capturing target.

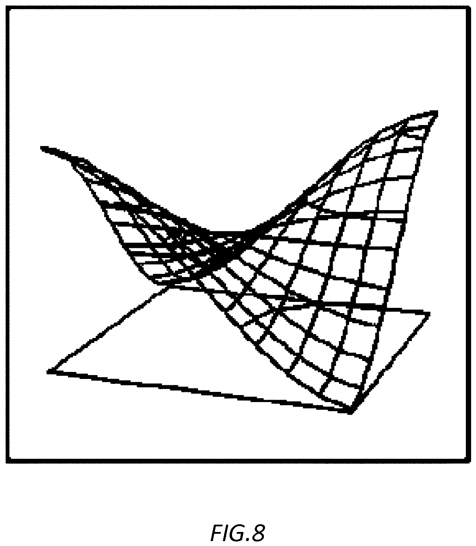

Fig. 8 illustrates a saddle shape of the image-capturing target. The saddle shape may be a shape that is concave in the image-capturing direction and has curvature in two directions, like a horse's saddle. In the figure, the curvature in the depth direction differs from the curvature in the left and right direction. The texture of the saddle shape may be caused by the saddle shape, and may be a texture of which brightness changes as moving away from the center portion of the image-capturing target, and of which brightness changes anisotropically.

### (Second Embodiment)

### ((Apparatus 1A))

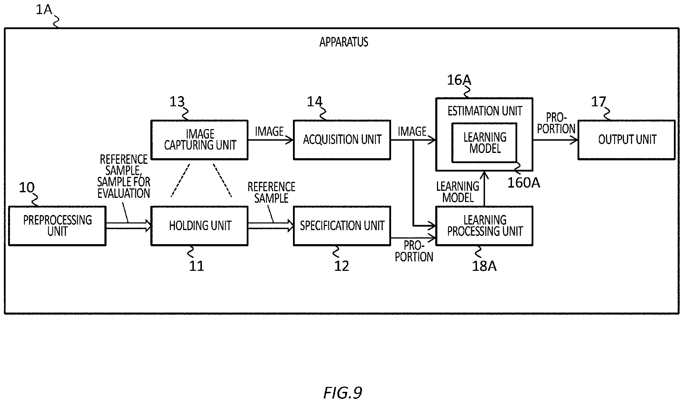

Fig. 9 illustrates an apparatus 1A according to a second embodiment. The apparatus 1A includes a learning processing unit 18A and an estimation unit 16A. It should be noted that, in the apparatus 1A according to the present embodiment, the configuration that is the same or approximately the same as that of the apparatus 1 shown in Fig. 1 is given the same sign and the description is omitted.

The learning processing unit 18A generates a learning model 160A by learning processing. The learning model 160A outputs the proportion of the detection targets contained in the sample shown in the input image by using the learning data including the corresponding set of the image of the reference sample and the proportion of the detection targets contained in the reference sample. The learning processing unit 18A may generate the learning model 160A by the machine learning of deep learning or the like as one example. In machine learning, the learning data including the image of various types of cells or microorganisms and the information indicating the types of the captured cells or microorganisms may be used. The learning processing unit 18A may supply the generated learning model 160A to the estimation unit 16.

The estimation unit 16A estimates the proportion of the detection targets contained in the sample shown in the image acquired by the acquisition unit 14. The estimation unit 16A may estimate the proportion of the detection targets contained in the sample for evaluation according to the input of the image of the sample for evaluation that is different from the reference sample.

The estimation unit 16A according to the present embodiment may perform estimation by using the learning model 160A. As one example in the present embodiment, the estimation unit 16A is described to have the learning model 160A inside, but the learning model 160A may be provided outside the estimation unit 16A. The estimation unit 16A may regard the proportion output from the learning model 160A according to the supply of the image supplied from the acquisition unit 14 to the learning model 160A, as the proportion of the detection targets.

According to the above apparatus 1A, the learning model 160A for outputting the proportion of the detection targets contained in the sample according to the input of the image of the sample by using the learning data including the corresponding set of the image of the reference sample and the proportion of the detection targets contained in the reference sample is generated by the learning processing. Therefore, by capturing the sample, the proportion of the detection targets in the sample can be estimated with high accuracy.

### ((Operations))

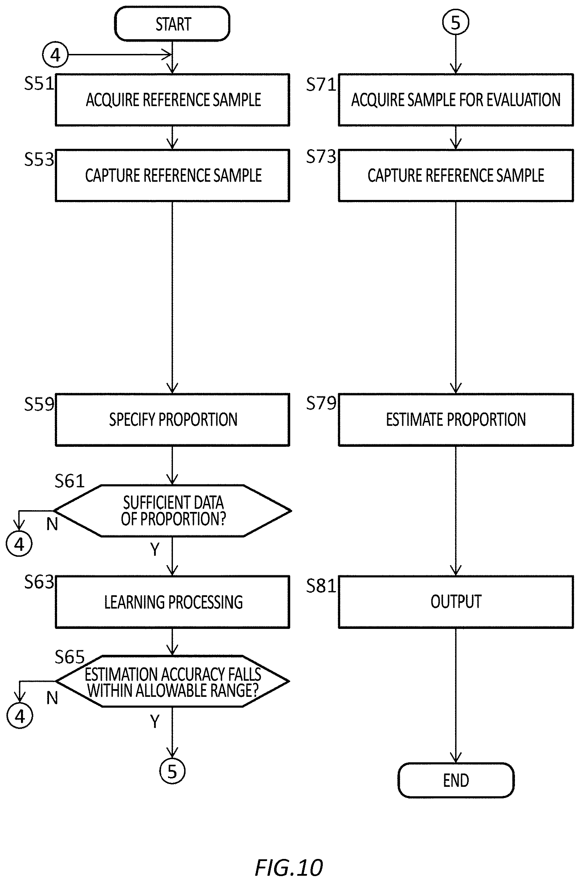

Fig. 10 illustrates the operations of the apparatus 1A. By performing the process of steps S51 to S81, the apparatus 1A estimates the proportion of the detection targets contained in the sample for evaluation.

The preprocessing unit 10 in step S51 acquires the reference sample. The preprocessing unit 10 may produce the reference sample in the same manner as step S11 as described above.

The image capturing unit 13 in step S53 captures the reference sample. The image capturing unit 13 may capture the reference sample in the same manner as step S13 as described above. The captured image may be supplied to the learning processing unit 18A via the acquisition unit 14.

In step S59, the specification unit 12 specifies the proportion of the detection targets contained in the reference sample acquired in step S51 (that is, the measured proportion). The specification unit 12 may specify the proportion of the detection targets in the same manner as step S19 as described above. The specified proportion may be supplied to the learning processing unit 18A. As one example in the present embodiment, identification information of each reference sample may be attached to the image supplied to the learning processing unit 18A in step S53 and the proportion supplied to the learning processing unit 18A in step S59, and the learning processing unit 18A may associate the image and the measured proportion regarding the same reference sample based on this identification information to make a corresponding set.

In step S61, the learning processing unit 18A determines whether the number of pieces of data of the measured proportions specified in step S59 has reached the required number of pieces of data. The learning processing unit 18A may perform determination in the same manner as the determination unit 15 in step S21 as described above.

When the number of pieces of data of the proportions has been determined to reach the required number of pieces of data (step S61; Yes), the process may move to step S63. When the number of pieces of data of the proportions has been determined not to reach the required number of pieces of data (step S61; No), the process may move to step S51. In this manner, another reference sample is re-acquired to perform the process of steps S53 to S59. As long as the cells to be detected contained in the reference sample in step S51 in each round are the same type of cells as each other, the source of acquisition, culture conditions, cell state, and liquid components of the cells as image-capturing targets may be the same or may be different. Additionally or alternatively, as long as the cells to be detected contained in the reference sample are cells in the same state as each other, the source of acquisition, culture conditions, cell type, and liquid components of the cells as image-capturing targets may be the same or may be different.

In step S63, the learning processing unit 18A performs the learning processing of the learning model 160A. The learning processing unit 18A may perform the learning processing of the learning model 160A so as to output the proportion of the detection targets contained in the sample shown in the input image by using the learning data including the corresponding set of the image of the reference sample and the proportion of the detection targets contained in the reference sample. The learning processing unit 18A may perform the learning processing by using all corresponding sets, or may perform the learning processing by using a part of corresponding sets produced in steps S51 to S59.

In step S65, the learning processing unit 18A determines whether the estimation accuracy regarding the learning model 160A falls within the allowable range. The learning processing unit 18A may supply the image of at least one corresponding set (the corresponding set that does not use the learning processing as one example) to the learning model 160A to output the estimated proportion of the detection targets, and calculate the estimation accuracy for the measured proportion of the corresponding set (that is, the proportion of the actual detection targets). The learning processing unit 18A may calculate the estimation accuracy and determine whether the estimation accuracy falls within the allowable range, in the same manner as the determination unit 15 in step S25 as described above.

When the estimation accuracy is determined not to fall within the allowable range (step S65; No), the process may move to step S51. In this manner, the reference sample is re-acquired and the learning processing is performed. When the estimation accuracy is determined to fall within the allowable range (step S65; Yes), the learning model 160A may be supplied to the estimation unit 16, and the process may move to step S71.

In step S71, the preprocessing unit 10 acquires the sample for evaluation. The preprocessing unit 10 may acquire the sample for evaluation as it is in the same manner as step S31 as described above.

In step S73, the image capturing unit 13 captures the sample for evaluation. The image capturing unit 13 may capture the sample for evaluation in the same manner as step 33 as described above. The captured image may be supplied to the acquisition unit 14. In this manner, the image of the sample for evaluation is acquired by the acquisition unit 14, and is supplied from the acquisition unit 14 to the estimation unit 16A.

In step S79, the estimation unit 16A estimates the proportion of the detection targets contained in the sample for evaluation. In this manner, the proportion of the detection targets contained in the sample for evaluation shown in the acquired image is estimated by the estimation unit 16A. The estimation unit 16A may estimate the proportion output from the learning model 160A according to the supply of the image of the sample for evaluation to the learning model 160A, as the proportion of the detection targets.

Then in step S81, the output unit 17 outputs the proportion of the estimated detection targets. The output unit 17 may output the proportion in the same manner as step S41 as described above.

### (Variant Example)

In the above-described embodiment, the apparatus 1 is described to include the preprocessing unit 10, the holding unit 11, the image capturing unit 13, the specification unit 12 and the determination unit 15, but the apparatus 1 may also not include any of these. When the apparatus 1 does not include the preprocessing unit 10, the image capturing unit 13 may capture the reference sample without the processing being performed with the cell sorter. When the apparatus 1 does not include the holding unit 11 or the image capturing unit 13, the acquisition unit 14 may acquire the image of the sample from an external image-capturing apparatus. When the apparatus 1 does not include the specification unit 12, the determination unit 15 may acquire the proportion of the specified detection targets outside the apparatus 1 (as one example, the proportion specified manually by a user). When the apparatus 1 does not include the determination unit 15, the estimation unit 16 may estimate the proportion by using the extraction conditions determined outside the apparatus 1 (as one example, extraction conditions determined by the user via trial and error).

Similarly, although the apparatus 1A has been described to include the preprocessing unit 10, the holding unit 11, the specification unit 12, the image capturing unit 13 and the learning processing unit 18A, the apparatus 1A may not include any of these. When the apparatus 1A does not include the specification unit 12, the learning processing unit 18A may acquire the proportion of the specified detection targets outside the apparatus 1A. When the apparatus 1A does not include the learning processing unit 18A, the estimation unit 16 may estimate the proportion by using the learning model 160A generated outside the apparatus 1A.

Although the apparatus 1, 1A are described to specify the proportion of the detection targets after capturing the image of the reference sample, the image-capturing and specifying the proportion may be performed in a reverse order, or may be performed in parallel. In these cases, the image may be acquired by using one part, and the proportion may be specified by using another part of the reference sample.

Although the determination unit 15 of the apparatus 1 has been described to determine an extraction condition as one to be used according to the fact that the estimation accuracy regarding the tentatively determined extraction condition falls within the allowable range, the extraction condition may be determined with another methodology. For example, the determination unit 15 may determine the extraction condition as one to be used, of which estimation accuracy is closest to 100%, after tentatively determining the extraction condition in a reference number.

Although the cells are described to be the image-capturing targets, the image-capturing targets may also be microorganisms. In this case, the detection targets may be microorganisms of which content proportion is to be detected among the image-capturing targets as microorganisms. The microorganism may be microscopic organisms that cannot be observed by the naked eye and may be eukaryotic algae, protozoa, fungi, prokaryotic bacteria, cyanobacteria, etc., or even may be viruses. The bacteria may be Chlamydia, Rickettsia, or Actinomycetes. The microorganisms to be detected may be a predetermined type of microorganism (microalgae as one example) or a microorganism in a predetermined state (microorganisms in a normal or abnormal state or in a specific cell cycle as one example).

Various embodiments of the present invention may be described with reference to flowcharts and block diagrams of which blocks may represent (1) steps of processes in which operations are performed or (2) sections of devices responsible for performing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations designated in the flowcharts or block diagrams. Examples of the computer-readable medium may include an electronic storage medium, a magnetic storage medium, an optical storage medium, an electromagnetic storage medium, a semiconductor storage medium, and the like. More specific examples of computer-readable media may include floppy disks (registered trademark), diskettes, hard disks, random access memory (RAM), read-only memory (ROM), erasable programmable read-only memory, erasable programmable read-only memory (EPROM or flash memory), electrically erasable programmable read-only memory (EEPROM), static random access memory (SRAM), Compact disc read-only memory (CD-ROM), digital versatile disc (DVD), Blu-ray (registered trademark) disc, memory stick, integrated circuit card, etc.

The computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA

(registered trademark), C++, or the like, and a conventional procedural programming language such as a "C" programming language or a similar programming language.

The computer-readable instruction may be provided for a processor or programmable circuitry of a programmable data processing apparatus, such as a computer, locally or via a local area network (LAN), a wide area network (WAN) such as the Internet, or the like to execute the computer-readable instruction in order to create means for executing the operations specified in the flowcharts or block diagrams. Here, the computer may be a personal computer (PC), a tablet computer, a smart phone, a workstation, a server computer, or a computer such as a general purpose computer or a special purpose computer, or may be a computer system to which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processors include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the computers as needed. For example, in execution of multiple tasks, each of the plurality of processors may execute a portion of each task piece by piece by performing task-switching for each time slice. In this case, which portion of one program each processor is responsible for executing dynamically changes. Moreover, which portion of the program each of the plurality of processors is responsible for executing may be determined statically by multiprocessor-aware programming.

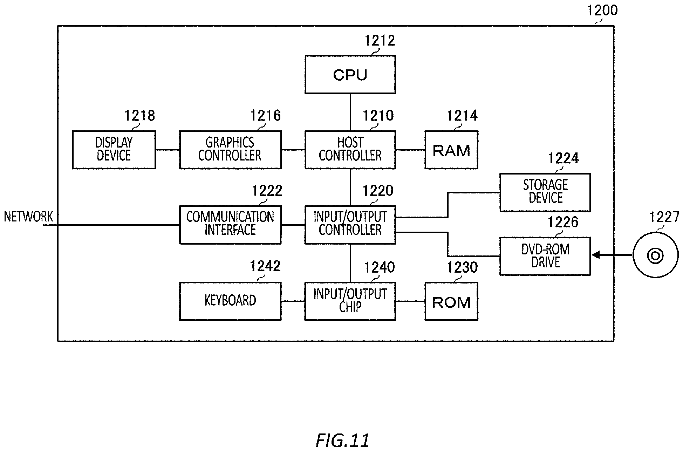

Fig. 11 illustrates an example of a computer 1200 in which a plurality of aspects of the present invention may be wholly or partly embodied. A program that is installed in the computer 1200 can cause the computer 1200 to function as one or more "sections" in an operation or an apparatus associated with the embodiment of the present invention, or cause the computer 1200 to perform the operation or the one or more sections thereof, and/or cause the computer 1200 to perform processes of the embodiment of the present invention or steps thereof. Such a program may be performed by a CPU 1212 so as to cause the computer 1200 to perform certain operations associated with some or all of the blocks of flowcharts and block diagrams described herein.

The computer 1200 in accordance with the present embodiment includes a CPU 1212, a RAM 1214, a graphic controller 1216, and a display device 1218, which are mutually connected by a host controller 1210. The computer 1200 also includes input/output units such as a communication interface 1222, storage devices such as hard disk drives 1224, DVD-ROM drives 1226, and IC card drives, which are via the input/output controller 1220 connected to the host controller 1210. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 on a frame buffer or the like provided in the RAM 1214 or in itself, and causes the image data to be displayed on a display device 1218.

The communication interface 1222 communicates with another electronic device via a network. The storage 1224 stores programs and data used by the CPU 1212 in the computer 1200. The DVD-ROM drive 1226 reads the program or data from the DVD-ROM 1227 and provides the program or data via RAM 1214 to the storage 1224. The IC card drive reads the programs and the data from the IC card, and/or writes the programs and the data to the IC card.

The ROM 1230 stores therein a boot program or the like that is performed by the computer 1200 at the time of activation, and/or a program depending on the hardware of the computer 1200. The input/output chip 1240 may also connect various input/output units to the input/output controller 1220 via a parallel port, a serial port, a keyboard port, a mouse port, or the like.

Programs are provided by a computer-readable medium such as the DVD-ROM 1227 or the IC card. The program is read from a computer-readable medium, installed in storage device 1224, RAM 1214, or ROM 1230, which are also examples of computer-readable media, and executed by CPU 1212. Information processing described in these programs is read by the computer 1200, and provides cooperation between the programs and the various types of hardware resources described above. An apparatus or method may be constituted by realizing the operation or processing of information in accordance with the usage of the computer 1200.

For example, when communication is performed between the computer 1200 and an external device, the CPU 1212 may perform a communication program loaded onto the RAM 1214 to instruct communication processing to the communication interface 1222, based on the processing described in the communication program. The communication interface 1222, under the control of the CPU 1212, reads transmission data stored in a transmission buffer processing region provided in a recording medium such as RAM 1214, storage device 1224, DVD-ROM 1227, or IC card, transmits the read transmission data to the network or writes the received data received from the network to the receive buffer processing region provided on the recording medium or the like.

The CPU 1212 may also allow all or necessary portions of files or databases stored on external recording medium such as storage devices 1224, DVD-ROM drives 1226 (DVD-ROM 1227), IC cards, etc. to be read into RAM 1214 and perform various types of processing on the data in RAM 1214. The CPU 1212 may then write back the processed data to the external recording medium.

Various types of information such as various types of programs, data, tables, and databases may be stored in a recording medium and subjected to information processing. The CPU 1212 may perform various types of processing on the data read from the RAM 1214, which includes various types of operations, processing of information, condition judging, conditional branch, unconditional branch, search/replace of information, etc., as described throughout this disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in said entry, and thereby acquiring the attribute value of the second attribute associated with the first attribute satisfying a predefined condition.

The above-explained program or software modules may be stored in the computer readable media on or near the computer 1200. In addition, a recording medium such as a hard disk or a RAM provided in a server system connected to a dedicated communication network or the Internet can be used as the computer readable media, thereby providing the program to the computer 1200 via the network.

While the present invention has been described by way of the embodiments, the technical scope of the present invention is not limited to the scope described in the above-described embodiments. It is apparent to persons skilled in the art that various alterations or improvements can be made to the above-described embodiments. It is also apparent from description of the claims that the embodiments to which such modifications or improvements are made may be included in the technical scope of the present invention.

It should be noted that each process of the operations, procedures, steps, stages, and the like performed by the apparatus, system, program, and method shown in the claims, specification, or drawings can be executed in any order as long as the order is not indicated by "prior to", "before", or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

1, 1A: apparatus; 10: preprocessing unit; 11: holding unit; 12: specification unit; 13: image capturing unit; 14: acquisition unit; 15: determination unit; 16, 16A: estimation unit; 17: output unit; 18A: learning processing unit; 160A: learning model; 1200: computer; 1210: host controller; 1212: CPU; 1214: RAM; 1216: graphics controller; 1218: display device; 1220: input/output controller; 1222: communication interface; 1224: storage; 1226: DVD-ROM drive; 1227: DVD-ROM; 1230: ROM; 1240: input/output chip; 1242: keyboard.

## Claims

1. An apparatus comprising:
an acquisition unit that acquires an image of a sample containing cells or microorganisms as image-capturing targets;
an estimation unit that estimates a proportion of detection targets to image-capturing targets in a sample shown in an image acquired by the acquisition unit, based on a group of an image of a reference sample containing image-capturing targets and a proportion of cells or microorganisms as the detection targets to the image-capturing targets in the reference sample; and
an output unit that outputs a proportion estimated by the estimation unit.

2. The apparatus according to claim 1, further comprising
a determination unit that determines an extraction condition for extracting image-capturing targets in an image of the group according to the proportion of the group, among extraction conditions of image-capturing targets, which are settable by a parameter indicating a shape or a texture of an image-capturing target in the image, based on the group of an image of the reference sample and the proportion regarding the reference sample,
wherein the estimation unit estimates the proportion regarding a sample shown by an input image, by using the extraction condition determined by the determination unit.

3. The apparatus according to claim 2, wherein the determination unit determines an extraction condition for extracting image-capturing targets in the image according to a proportion of the detection targets to image-capturing targets in each of a plurality of groups, including the group, based on the plurality of groups with proportions, including the proportion, different from each other.

4. The apparatus according to claim 2 or 3, wherein:
the parameter indicating a shape of an image-capturing target in an image includes at least one of an area, diameter, perimeter, circularity, compactness, ratio of major axis and minor axis, skeletal length, number of branches or number of limbs of the image-capturing target; and
a parameter indicating a texture of an image-capturing target in an image includes a number of at least one preset texture.

5. The apparatus according to any one of claims 1 to 4, wherein the estimation unit performs estimation by using a learning model that outputs the proportion regarding a sample shown by an input image, which is a learning model produced by learning processing using learning data including the group of an image of the reference sample and the proportion regarding the reference sample.

6. The apparatus according to any one of claims 1 to 5, further comprising
a learning processing unit that produces a learning model that outputs the proportion regarding a sample shown by an input image, by using learning data including the group of an image of the reference sample and the proportion regarding the reference sample,
wherein the estimation unit performs estimation by using the learning model.

7. The apparatus according to any one of claims 1 to 6, wherein the acquisition unit acquires the image captured in a nondestructive and non-staining state of the detection targets.

8. The apparatus according to any one of claims 1 to 7, further comprising a specification unit that specifies the proportion regarding the reference sample by performing at least one of destruction or staining on cells or microorganisms contained in the reference sample.

9. The apparatus according to any one of claims 1 to 8, further comprising a preprocessing unit that produces the reference sample by performing preprocessing on a sample with a cell sorter.

10. The apparatus according to any one of claims 1 to 9, further comprising an image capturing unit that captures a sample.

11. The apparatus according to any one of claims 1 to 10, wherein the detection targets are cells or microorganisms of a predetermined type.

12. The apparatus according to any one of claims 1 to 11, wherein the detection targets are cells or microorganisms in a predetermined state.

13. A method comprising:
acquiring an image of a sample containing cells or microorganisms as image-capturing targets;
estimating a proportion of detection targets to image-capturing targets in a sample shown in an acquired image, based on a group of an image of a reference sample containing image-capturing targets and a proportion of cells or microorganisms as the detection targets to the image-capturing targets in the reference sample; and
outputting an estimated proportion.

14. A non-transitory computer-readable medium having recorded thereon a program which, when executed by a computer, causes the computer to function as:
an acquisition unit that acquires an image of a sample containing cells or microorganisms as image-capturing targets;
an estimation unit that estimates a proportion of detection targets to image-capturing targets in a sample shown in an image acquired by the acquisition unit, based on a group of an image of a reference sample containing image-capturing targets and a proportion of cells or microorganisms as the detection targets to the image-capturing targets in the reference sample; and
an output unit that outputs a proportion estimated by the estimation unit.
